# FASCICULE DE BREVET EUROPEEN

(11) **EP 3 049 636 B1**
(45) Date de publication et mention de la délivrance du brevet: **10.11.2021**
(21) Numéro de dépôt: 14790196.1
(22) Date de dépôt: 23.09.2014
(51) Int. Cl.: F01D 5/30, F01D 5/08

(54) **ENSEMBLE ROTATIF POUR TURBOMACHINE**
ROTIERENDE ANORDNUNG FUER EINE TURBOMASCHINE
ROTARY ASSEMBLY FOR A TURBOMACHINE

(30) Priorité: 25.09.2013 FR 1359239
(43) Date de publication de la demande: 03.08.2016
(73) Titulaire: Safran Aircraft Engines, 75015 Paris (FR)
(72) Inventeur: LEDUC, Mathieu, Louis, Jean, 77550 Moissy Cramayel Cedex (FR); CARLOS, Pierre-Louis, Alexandre, 77550 Moissy Cramayel Cedex (FR); ROUSSILLE, Clément, 33200 Bordeaux (FR)
(74) Mandataire: Ernest Gutmann - Yves Plasseraud S.A.S.
(86) Numéro de dépôt international: PCT/FR2014/052375
(87) Numéro de publication internationale: WO 2015/044578

(56) Documents cités:
- EP-A2- 1 443 179
- FR-A1- 2 982 635
- GB-A- 2 148 404
- US-A- 5 318 405
- US-B1- 6 234 756
- None

## Description

L'invention se rapporte à un ensemble rotatif pour turbomachine, telle qu'en particulier un turboréacteur d'avion, ainsi qu'à une turbomachine comprenant un tel ensemble.

Un tel ensemble, que l'on retrouve notamment dans une turbine, comprend un disque, et des aubes s'étendant radialement depuis le disque et dont les pieds sont engagés axialement et retenus radialement dans des alvéoles de la périphérie externe du disque, disposés en alternance avec des dents. Les aubes comprennent également des plates-formes internes agencées circonférentiellement bout à bout de manière à définir ensemble la limite interne du flux d'écoulement des gaz chauds circulant dans la turbine. La partie de l'aube située entre la plate-forme interne et le pied est appelée échasse. Selon cette disposition, des espaces sont formés entre deux échasses adjacentes, et forment des cavités inter-échasses ou inter-aubes. Les plates-formes peuvent se prolonger à leurs extrémités amont et aval par des parois s'étendant radialement vers l'intérieur afin d'obturer axialement et en partie les cavités inter-aubes. Des cavités dites de fond d'alvéole sont également formées dans les espaces radiaux formés entre les pieds d'aubes et les fonds des alvéoles.

Afin d'assurer le bon fonctionnement de la turbomachine, un air de refroidissement est prélevé dans un compresseur basse-pression ou haute-pression par exemple et acheminé depuis l'amont ou l'aval du disque jusqu'aux cavités de fond d'alvéole afin d'assurer le refroidissement du disque et de protéger ce dernier de l'échauffement provoqué par les gaz chauds du flux de veine circulant entre deux plates-formes adjacentes.

De plus, lorsque l'ensemble rotatif décrit ci-dessus est agencé en amont du rotor de turbine, un espace annulaire est formé entre le disque et un élément de stator amont. Cet espace annulaire forme ainsi une communication directe entre la veine des gaz chauds et des éléments internes de la turbomachine. Dans ce cas, l'air de refroidissement acheminé depuis l'amont du disque sert également à empêcher la réintroduction des gaz de veine dans l'espace annulaire amont du disque.

Dans le cas où aucune technologie particulière d'étanchéité n'est appliquée en amont des cavités inter-aubes et recouvrant par exemple les parois radiales des plates-formes, des fuites d'air de refroidissement se produisent aux zones de jonction entre les aubes et circulent dans les cavités inter-aubes. Ainsi, cet air de refroidissement ne participe pas au refroidissement du disque à travers les cavités de fond d'alvéole, et ne participe pas à empêcher la réintroduction des gaz de veine vers les éléments internes de la turbomachine s'il y a lieu. Ces fuites d'air nécessitent un prélèvement d'air plus important au niveau du compresseur basse-pression, ce qui réduit le rendement de la turbomachine.

Pour minimiser ces fuites d'air, une solution consiste, comme dans GB 2 148 404, à étanchéifier les cavités inter-aubes au moyen d'un jonc annulaire monté axialement contre les pieds d'aubes et les dents du disque, de manière à recouvrir la zone située radialement entre les cavités de fond d'alvéole et les cavités inter-aubes, et maintenu serré sur le disque par un flasque. Un passage annulaire est défini entre le flasque et le disque, radialement à l'intérieur du jonc, pour guider l'air de refroidissement provenant de l'intérieur du disque vers les cavités de fond d'alvéole. Ce jonc permet alors une isolation entre ce passage annulaire d'air de refroidissement et les cavités inter-aubes situées à l'extérieur du jonc.

Cependant, il a été remarqué qu'en fonctionnement, l'aube possède un degré de liberté axial dans l'alvéole qui est permis d'une part par le fait que le dimensionnement axial des pieds d'aubes doit être nominalement plus petit que le dimensionnement axial du disque afin de s'assurer que les extrémités des pieds d'aubes ne dépassent jamais des extrémités axiales des alvéoles, pour éviter d'appliquer des contraintes axiales de serrage sur les pieds d'aubes dues par exemple au flasque appliqué sur la face amont du disque. D'autre part, ce degré de liberté est permis par les dilatations différentielles entre le disque et les aubes, en particulier lorsque ces dernières sont formées en Composite à Matrice Céramique (C.M.C.) et que les disques sont réalisés en alliage métallique.

En fonctionnement, ce degré de liberté induit donc la formation d'interstices entre le jonc annulaire d'étanchéité serré axialement contre les dents du disque, et les extrémités axiales des pieds des aubes. Une partie de l'air de refroidissement acheminé dans les cavités de fond d'alvéole circule donc à travers ces interstices jusqu'aux cavités inter-aubes et ne remplit plus sa fonction primaire de refroidissement des alvéoles du disque.

Dans GB 2 148 404, une succession de plateaux (repéré pour l'un 84, figure 2 de ce document) en secteurs d'anneau s'étendent devant les pieds d'aube et les dents et plaquent le jonc, ou joint, annulaire dans un espace défini par un épaulement axial. Par l'effet centrifuge, lorsque la turbomachine fonctionne, le joint annulaire vient étroitement en appui contre l'épaulement, assurant ainsi l'étanchéité recherchée. En fonctionnement, le joint (qui présente une section en S ou sensiblement en oméga basculé verticalement) est fortement sollicité et le document explique page 3 que l'étanchéité dépend de la manière dont il se déforme. Ainsi, une fatigue du joint peut rendre l'étanchéité plus aléatoire. En outre, lorsque l'effet centrifuge est moindre ou annulé (machine à l'arrêt), le joint est mobile dans son espace. Un endommagement, voire un mauvais positionnement, peut survenir. En outre divulgue US5318405 un ensemble rotatif pour une turbomachine selon le préambule de la revendication 1.

La présente invention vise à éviter une telle situation et à sécuriser l'étanchéité,en apportant une solution simple, efficace et économique à ces problèmes.

A cette fin, elle propose un ensemble rotatif pour turbomachine, comprenant un disque dont la périphérie externe est formée d'une alternance d'alvéoles et de dents, et des aubes s'étendant radialement depuis le disque et dont les pieds sont engagés axialement et retenus radialement dans les alvéoles du disque, les dents du disque et les pieds d'aube comprenant à leurs extrémités axiales amont et/ou aval des épaulements axiaux disposés circonférentiellement bout à bout en alternance et formant conjointement une surface cylindrique qui fait face radialement vers l'intérieur du disque et sur laquelle est maintenu en appui un joint annulaire d'étanchéité au moyen d'une pièce solidarisée au disque, caractérisé en ce que ladite pièce s'étend sous les épaulements et appuie radialement le joint annulaire contre ladite surface cylindrique .

Ainsi, lorsque la pièce annulaire de serrage du joint assure l'amenée d'air comme décrit précédemment, l'air de refroidissement ne peut plus circuler vers une cavité inter-aube du fait du contact continu du joint avec la surface cylindrique formée par les épaulements.

De préférence, la pièce de maintien du joint et qui est solidarisée au disque comprendra une gorge annulaire dans laquelle le joint annulaire sera monté. Ainsi, le joint sera bien maintenu et moins sollicité, ceci étant favorable à sa longévité et à son efficacité.

Selon une autre caractéristique de l'invention, les épaulements des pieds d'aubes sont formés par les faces d'extrémités radialement internes de parois radiales amont et/ou aval s'étendant transversalement au pied d'aube et reliées extérieurement à des plates-formes des aubes et intérieurement aux pieds d'aubes (à une certaine distance radiale de l'extrémité libre desquels ces épaulements sont donc situés). Ainsi, le joint annulaire est serré sur une surface cylindrique et non plus sur des surfaces radiales d'extrémités libres des pieds d'aubes. Le joint annulaire reste constamment en contact avec la surface cylindrique quel que soit le déplacement axial relatif entre les pieds d'aubes et les alvéoles du disque en fonctionnement, ce qui permet plus efficacement un serrage sans discontinuité de toute la surface externe du joint sur la surface cylindrique formées par les épaulements axiaux des dents et des pieds d'aubes (la largeur des épaulements des pieds peut être adaptée au besoin, quelle que soit la largeur -ou dimension axiale- des pieds eux-mêmes) .

Les parois transverses présentent l'intérêt supplémentaire d'étanchéifier les cavités inter-aubes vis-à-vis du flux de veine.

Ladite pièce solidarisée au disque peut être un flasque annulaire appliqué sur une face amont et/ou aval du disque et comprenant des moyens de crabotage coopérant avec des moyens de crabotage complémentaires du disque pour la retenue axiale du flasque sur le disque.

Préférentiellement, le flasque est formé de plusieurs secteurs agencés circonférentiellement bout à bout et chaque secteur de flasque comprend une partie interne en appui radialement vers l'extérieur sur le joint annulaire et une partie externe comprenant lesdits moyens de crabotage coopérant avec lesdits moyens de crabotage complémentaires formés sur les dents du disque, ces moyens de crabotage complémentaires du disque étant formés en saillie axiale par rapport aux pieds d'aubes.

Avantageusement, la partie externe de chaque secteur de flasque comprend une paroi radiale se prolongeant extérieurement par un rebord évasé dont l'extrémité libre externe est destinée à venir en appui sur l'une des parois transverses amont ou aval des aubes.

Pour un effet optimal, la partie interne de chaque secteur de flasque comprend une paroi cylindrique dont une partie d'extrémité en vis-à-vis du disque est en appui radialement vers l'extérieur sur le joint annulaire et se prolonge par une paroi tronconique s'étendant vers l'intérieur en s'éloignant du disque, un jonc annulaire fendu étant intercalé axialement entre la paroi tronconique et le disque.

Ce montage avec un unique appui radial de la paroi cylindrique au niveau du joint permet, grâce à la reprise des efforts centrifuges de la pièce, d'écraser le joint entre la paroi cylindrique du flasque et la surface cylindrique formée par les épaulements pour une étanchéité optimale. A froid, la pièce est montée par crabotage, une fois les aubes logées dans leurs alvéoles. En fonctionnement, la force centrifuge induit une augmentation du diamètre du jonc lequel appuie sur la paroi tronconique et provoque un basculement axial des secteurs du flasque autour de la ligne de crabotage, ce qui amène l'extrémité libre du rebord évasé à venir en contact avec les parois radiales transverses des aubes, évite ainsi une réintroduction d'air de veine entre les rebords évasés et les parois radiales transverses et assure une meilleure protection thermique des dents.

Selon une autre réalisation de l'invention, ladite pièce solidarisée au disque est un anneau de support de léchettes d'étanchéité destinées à coopérer avec un bloc de matière abradable en vis-à-vis radial.

Avantageusement, l'aube est en composite à matrice céramique et le disque est en alliage métallique permettant une réduction significative de la masse (le rapport de densité entre alliage métallique et C.M.C. étant compris entre 3 et 4) du rotor permettant une réduction de la consommation de la turbomachine.

L'invention concerne également une turbine de turbomachine, caractérisée en ce qu'elle comprend un ensemble rotatif selon l'une des revendications précédentes.

L'invention concerne enfin une turbomachine, telle qu'un turboréacteur ou un turbopropulseur, caractérisée en ce qu'elle comprend un ensemble rotatif selon l'une des revendications précédentes.

D'autres avantages et caractéristiques de l'invention apparaîtront à la lecture de la description suivante faite à titre d'exemple non limitatif et en référence aux dessins annexés dans lesquels :
- la figure 1 est une vue schématique en coupe axiale d'un ensemble rotatif de turbine selon l'art antérieur ;
- la figure 2 est une vue schématique selon le plan de coupe II-II de la figure 1 ;
- la figure 3 est une vue en perspective d'un ensemble rotatif selon l'invention, vue de l'amont ou de l'aval suivant la réalisation retenue ;
- la figure 4 est une vue schématique de même type que la figure 2 et selon l'invention ;
- la figure 5 est une vue schématique en coupe axiale d'un ensemble rotatif de turbine selon une première réalisation de l'invention ;
- la figure 6 est une vue schématique en coupe axiale d'un ensemble rotatif de turbine selon une seconde réalisation de l'invention.

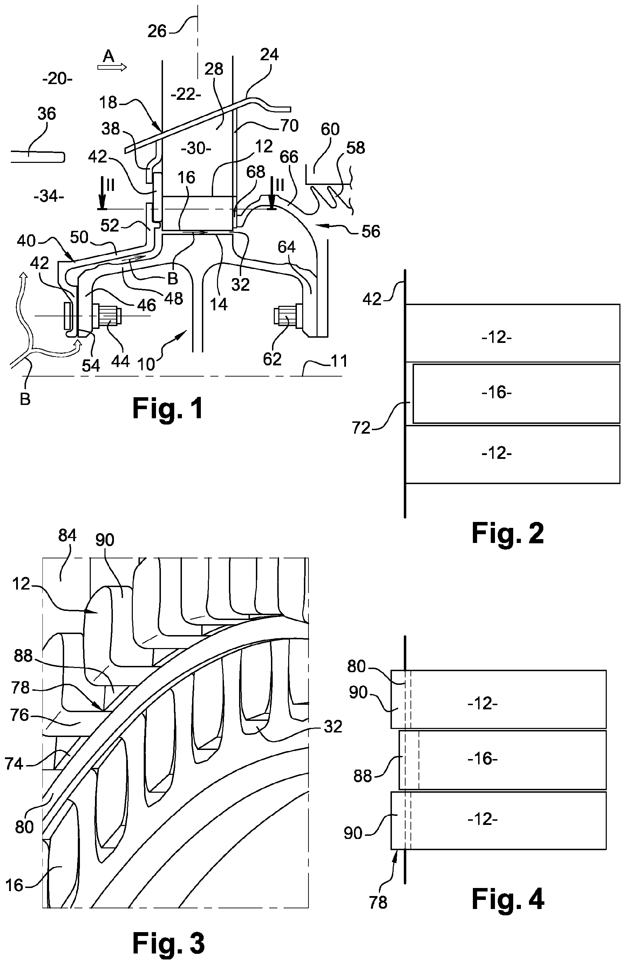

Selon la technique connue représentée en figures 1 et 2, un ensemble rotatif du turbine est formé d'un disque rotatif 10 centré sur l'axe 11 de la turbine, et comprenant à sa périphérie externe des dents (dont le sommet est référencé 12) disposées en alternance avec des alvéoles (dont le fond est référencé 14) dans lesquelles sont engagées axialement et retenus radialement des pieds d'aubes (dont l'extrémité interne est référencée 16), ces aubes 18 s'étendant radialement depuis les alvéoles 14 dans une veine annulaire 20 d'écoulement d'un flux d'air (flèche A) issu d'une chambre de combustion (non représenté).

Plus particulièrement, chaque aube 18 comprend radialement depuis l'extérieur vers l'intérieur une pale 22, une plate-forme 24 sensiblement perpendiculaire à l'axe d'allongement 26 de l'aube 18 et définissant la limite annulaire interne de la veine d'écoulement 20 des gaz chauds, une échasse 28 reliant la plate-forme 24 au pied d'aube 16 ayant une forme par exemple en queue d'aronde ou analogue pour assurer la retenue radiale des pieds d'aubes 16 dans les alvéoles 14. Selon cette disposition, des espaces sont formés entre deux échasses circonférentiellement adjacentes, et sont appelés des cavités inter-échasses ou inter-aubes 30. Des cavités dites de fond d'alvéole 32 sont également formées dans les espaces radiaux séparant les pieds d'aubes 16 des fonds des alvéoles 14.

Un débit d'air de refroidissement B est acheminé depuis un compresseur basse pression agencé en amont, par exemple, jusqu'à l'intérieur de la turbine, et est utilisé d'une part afin de refroidir la cavité de fond d'alvéole 32 et donc le disque 10, et d'autre part afin d'empêcher la réintroduction des gaz de veine A dans l'espace annulaire 34 formé entre le disque 10 et un élément de stator amont 36, cet espace annulaire formant une communication directe entre la veine 20 des gaz chauds et des éléments internes de la turbomachine.

Pour limiter le prélèvement d'air de refroidissement issu du compresseur, ce qui nuit aux performances de la turbomachine, des moyens d'étanchéité sont formés à l'amont et à l'aval du disque 10 pour définir deux circuits annulaires étanches de circulation de l'air de refroidissement B à travers les cavités de fond d'alvéole 32 et dans l'espace annulaire 34 en amont du disque 10. En particulier, l'objectif de ces moyens d'étanchéité est d'empêcher l'air de refroidissement B de circuler dans les cavités inter-aubes 30 à travers les espaces circonférentiels formés entre les échasses 28, et de ne contribuer ni à refroidir le disque 10 à travers les cavités de fond d'alvéole 32, ni à empêcher la réintroduction des gaz de veine A dans l'espace annulaire 34 en amont du disque.

Les moyens d'étanchéité comprennent des parois 38 s'étendant radialement vers l'intérieur depuis l'amont des plates-formes 24 des aubes 18 afin d'obturer axialement et en partie les cavités inter-aubes 30, un flasque annulaire 40 et un jonc annulaire 42.

Le flasque annulaire 40 comprend une paroi radiale interne 42 de fixation par boulonnage 44 sur une bride annulaire radiale 46 solidarisée au disque 10 par l'intermédiaire d'une paroi de liaison 48. Il comprend également une paroi tronconique 50 reliant la paroi radiale interne 42 à une paroi annulaire radiale externe 52 en appui axialement vers l'aval sur le jonc annulaire 42. Des ouvertures 54 de passage d'air sont ménagées à la jonction entre la paroi radiale interne 42 du flasque 40 et la bride annulaire 46 du disque pour permettre la circulation d'air B entre la paroi tronconique 50 du flasque et la paroi de liaison 48 du disque 10 jusqu'aux cavités de fond d'alvéole 32.

Le jonc annulaire 42 est ainsi plaqué à l'amont des pieds d'aubes 16 et du disque 10 radialement entre les plates-formes 24 et les cavités de fond d'alvéole 32, au moyen des parois radiales 38 s'étendant depuis l'amont des plates-formes 24 et de la paroi radiale 52 du flasque 40. Cet ensemble est utilisé afin d'étanchéifier axialement l'amont des cavités inter-aubes 30.

Les moyens d'étanchéité aval comprennent un anneau 56 de support de léchettes 58 coopérant avec un bloc de matière abradable 60 qui est porté par un distributeur (non représenté), l'anneau 56 étant fixé par boulonnage 62 entre une bride annulaire aval 64 du disque 10 et une bride annulaire amont d'un disque aval (non représenté), . L'anneau comprend un bras annulaire 66 aval incurvé, en appui axial élastique sur un jonc annulaire 68 appliqué contre les faces aval des dents 12 du disque et des pieds d'aubes 16. Le jonc 68 est agencé radialement juste au dessus des cavités de fond d'alvéole 32, afin que l'air de refroidissement B circule vers l'aval radialement à l'intérieur du bras 66 de l'anneau 56. Des parois radiales 70 s'étendent également radialement vers l'intérieur depuis l'aval des plates-formes jusqu'à la périphérie externe du jonc annulaire 68, afin d'étanchéifier axialement à l'aval les cavités inter-aubes 30.

Selon ce montage, il a été remarqué qu'en fonctionnement, une partie de l'air de refroidissement B passe des cavités de fond d'alvéole 32 vers les cavités inter-aubes 30. En effet, en fonctionnement, alors que les joncs annulaires 42, 68 sont plaqués contre les surfaces radiales d'extrémité des dents 12 du disque, des interstices 72 axiaux se forment entre les joncs annulaires 42, 68 et les extrémités axiales des pieds d'aubes 16. Cela est du d'une part au fait que le dimensionnement axial du pied d'aube 16 est nominalement plus petit que le dimensionnement axial du disque 10 afin de s'assurer que les extrémités des pieds d'aubes ne dépassent jamais des alvéoles 14 pour éviter que les contraintes axiales de serrage du flasque 40 et de l'anneau 56 de support de léchettes ne s'appliquent aux pieds d'aubes 16, et d'autre part au fait que les pieds d'aubes 16 se dilatent relativement moins que les dents du disque. Notamment, pour des aubes 18 en composite à matrice céramique (C.M.C.) et un disque 10 réalisé en alliage métallique par exemple à base Nickel résistant à haute température et apte à être forgé, il existe un rapport de deux à trois entre les dilatations différentielles de ces pièces. A cet égard, la figure 2 montre bien comment un interstice 72 axial peut être formé entre un jonc annulaire 42 et l'extrémité axiale d'un pied d'aube 16, permettant à de l'air de refroidissement de s'écouler de la cavité de fond d'alvéole vers la cavité inter-aube radialement à l'extérieur de l'interstice.

L'invention permet avantageusement, comme le montrent les figures 3 et 4, de former des moyens d'étanchéité entre les cavités de fond d'alvéole 32 et les cavités inter-aubes 30, non soumis aux décalages axiaux relatifs entre les extrémités des pieds d'aubes 16 et les extrémités des dents 12 du disque 10 dus aux dilatations différentielles entre les pièces et aux tolérances de fabrication.

Selon l'invention, des épaulements 74, 76 sont agencés circonférentiellement bout à bout en alternance aux extrémités amont et aval des pieds d'aube 16 et des dents 12 du disque de manière à former une surface cylindrique 78 amont et une surface cylindrique 78 aval orientées vers l'intérieur et sur lesquelles des joints annulaires 80 sont appliquées. Ces surfaces cylindriques amont et aval peuvent être considérées comme continues du fait de l'agencement bout à bout des épaulements des aubes et du disque. Ces épaulements sont formés radialement au même niveau que les zones de contact entre les flancs latéraux des dents 12 du disque et les flancs latéraux des pieds d'aubes 16, lorsque les pieds d'aubes sont plaqués vers l'extérieur contre les dents par effet centrifuge. Comme on le voit figure 3, lorsque les pieds 16 sont dans les alvéoles 14, et s'étendent donc radialement jusqu'aux cavités de fond d'alvéole 32, l'extrémité libre 160 de chaque pied est situé radialement plus à l'intérieur que ne l'est son épaulement 74. Et chaque fond d'alvéole 32 est fermé et ne communique pas avec celui où est logé le pied d'aube adjacent, à la différence de ce que prévoit GB 2 148 404 où le fait que l'extrémité libre (68) de chaque pied d'aube forme l'épaulement pour le joint (70) fait que l'espace de réception (56) est circonférentiel et commun à tous les pieds. La solution ici présentée à dents et alvéoles individualisées est préférable.

Pour cela, chaque aube comprend une paroi radiale transverse 84 amont et une paroi radiale transverse 84 aval s'étendant radialement entre la plate-forme 24 et le pied d'aube 16. Ces parois radiales transverses 84, lorsque les aubes sont formées en C.M.C., peuvent être réalisées en C.M.C. par tissage ou frittage, et assemblées par brasage, codensification, siliciuration. Lorsque les aubes sont métalliques, elles peuvent être formées d'une seule pièce par moulage avec les extrémités amont et aval de l'échasse 28. Ces parois transverses amont et aval 84 peuvent également être fixées extérieurement d'une manière similaire sur la plate-forme 24 de l'aube. Ces parois 84 possèdent à leurs extrémités internes un doigt radial 88 s'étendant en partie sur la hauteur du pied d'aube 16, entre des parties en saillie 90 axiale aux extrémités externes des dents 12 du disque. Les faces d'extrémité internes 74 des doigts 88 et les faces internes 76 des parties en saillie 90 des dents 12 du disque forment des portions de surface cylindrique 78 alignées circonférentiellement, faisant face radialement vers l'intérieur, situées radialement à l'extérieur des cavités de fond d'alvéole 32, et possédant une épaisseur axiale suffisante pour former les épaulements 74, 76 sur lequel un joint annulaire 80 peut être appliqué.

Ces portions 74, 76 de surface sont donc alignées circonférentiellement bout à bout, ce qui permet d'obtenir une surface 78 étanche utilisable pour la pose d'un joint d'étanchéité. Les portions de surface cylindrique sont dimensionnées assez grandes axialement pour qu'en fonctionnement, malgré les écarts relatifs décrits plus haut entre les extrémités axiales des dents 12 du disque et des pieds d'aube 16, il subsiste une bande de surface cylindrique 78 où le joint 80 reste en contact de manière à assurer une étanchéité permanente. Les parois radiales transverses 84 peuvent être réalisées, dans le cas d'une aube en CMC, par brasage d'une plaquette sur la face d'extrémité axiale de l'aube.

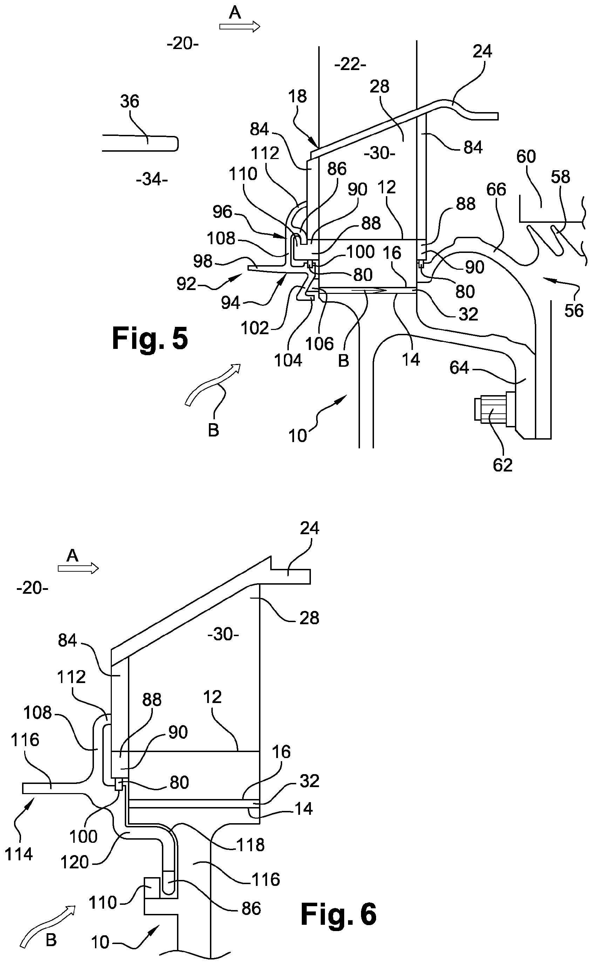

L'invention décrite ci-dessus est mise en œuvre dans deux modes de réalisation, le premier étant représenté à la figure 5 et le second à la figure 6. Dans ces deux modes de réalisation, des pièces annulaires sont rapportés contre l'une des faces du disque 10 et des aubes 18 afin de maintenir le joint 80 serré contre la surface cylindrique 78 des épaulements 74, 76, et de former le circuit d'air de refroidissement passant par les cavités de fond d'alvéole 32. Ainsi, il n'existe plus de fuite depuis le circuit d'air de refroidissement vers les cavités inter-aubes 30.

Dans le premier mode de réalisation représenté en figure 5, la pièce annulaire rapportée à l'amont est un flasque 92 sectorisé comprenant une partie interne 94 et une partie externe 96. La partie interne 94 comprend une paroi cylindrique 98 dont la partie s'étendant à l'opposé du disque forme un becquet, et dont la partie rapprochée du disque s'étendant sous les épaulements 74, 76 comprend une gorge annulaire 100 dans laquelle le joint annulaire 80 est monté et appuyé contre la surface cylindrique 78 des épaulements. La partie rapprochée de la paroi cylindrique est reliée à une paroi tronconique 102 s'étendant vers l'intérieur, s'éloignant du disque et raccordée à son extrémité interne à un rebord cylindrique 104 s'étendant en direction du disque 10. Un jonc annulaire fendu 106 à section en coin ou triangulaire est monté entre ladite paroi tronconique 102 du flasque et des faces radiales des dents 12 et des pieds d'aubes 16 en vis-à-vis axial de la paroi tronconique.

La paroi cylindrique 98 du flasque 92 est également reliée à une partie externe 96 comprenant une paroi radiale 108 s'étendant radialement vers l'extérieur en amont d'organes de crabotage 110 formés aux extrémités amont des parties en saillie 90 des dents 12 du disque. Ces organes de crabotage 110 des dents du disque s'étendent en saillie vers l'amont par rapport aux parois radiales transverses 84 amont des aubes et comprennent des crochets en L et des parties creuses alternées circonférentiellement. L'extrémité externe de la paroi radiale 108 du flasque 92 comprend des crochets en L 86 et des parties creuses. Les crochets en L du flasque 92 coopèrent avec les crochets des dents 12 du disque, pour assurer la retenue axiale du flasque 92 sur le disque 10. La paroi radiale 108 est de plus reliée extérieurement à un rebord évasé 112 vers l'aval, destiné à venir en appui contre les parois radiales transverses 84 des aubes.

Ce montage permet, grâce à la reprise des efforts centrifuges de la pièce, d'écraser radialement le joint 80 entre la paroi cylindrique 98 du flasque et la surface cylindrique 78 formée par les épaulements 74, 76, pour une étanchéité optimale. A froid, la pièce est montée par crabotage, une fois les aubes 18 logées dans leurs alvéoles 14. Le jonc fendu 106 s'ouvre circonférentiellement en fonctionnement par effet centrifuge, et glisse entre la paroi tronconique 102 et le disque 10, de manière à induire un basculement des secteurs du flasque 92 autour d'un axe situé dans la zone de crabotage et sensiblement perpendiculaire à l'axe 11 de la turbine, afin d'assurer un contact de l'extrémité libre du rebord évasé 112 sur les parois radiales transverses 84 et ainsi protéger les parties en saillie 90 des dents de disque contre l'air A de veine.

En fonctionnement, l'air de refroidissement circule entre la paroi tronconique 102 et le disque 10, et accède aux cavités de fond d'alvéoles 32 se situant alors sous le jonc fendu 106.

A l'aval du disque, et dans le cas où le circuit de refroidissement ne se limite pas seulement au fond d'alvéole mais aussi au refroidissement d'un anneau 56 supportant des léchettes, l'écrasement du joint 80 est assuré par la surface externe de l'extrémité amont du bras annulaire 66 de l'anneau 56, sous l'effet des forces centrifuges en fonctionnement.

Les moyens d'étanchéité selon l'invention en amont du disque peuvent donc être utilisés en combinaison avec les moyens d'étanchéité à l'aval du disque, ou bien de manière indépendante les uns des autres. En effet, une étanchéité optimale ne nécessite pas de former des épaulements à l'amont et à l'aval du disque.

Dans le second mode de réalisation représenté en figure 6, la pièce annulaire rapportée à l'amont est un flasque annulaire 114 réalisé d'une seule pièce. Dans ce mode de réalisation, le moyeu 116 du disque 10 présente peu avant son extrémité externe un élargissement axial 118. Les moyens de crabotage 110 sont formés dans ce mode de réalisation circonférentiellement sur la face amont du moyeu 116, à l'intérieur de son élargissement 118.

Contrairement au premier mode de réalisation, la paroi cylindrique 116 du flasque 114, s'étendant sous les épaulements 74, 76 des dents du disque et des pieds d'aube, et s'appuyant radialement contre le joint annulaire 80, n'est pas reliée à son extrémité à une paroi tronconique, mais à une paroi annulaire 120 s'étendant radialement vers l'intérieur du disque 10 jusqu'aux moyens de crabotage 110 du moyeu, et ayant une forme complémentaire de celle du disque 10. Cette paroi délimite avec la partie du disque en vis-à-vis un passage annulaire de circulation de l'air de refroidissement B entre cette paroi 120 et le disque. Cette paroi possède en outre à son extrémité interne des moyens de crabotage 86 coopérant avec les moyens de crabotage 110 du disque, pour un blocage axial du flasque 114.

A froid, le flasque 114 est monté précontraint contre le joint annulaire 80 en appui radial sur la surface cylindrique 78 des épaulements.

Ce second mode de réalisation d'un flasque amont 114 a l'avantage de réaliser une meilleure étanchéité de la partie amont du disque du fait de sa conception en une seule pièce, par rapport au premier mode de réalisation. De plus, il réduit les contraintes axiales appliquées aux dents 12 du disque 10 du fait du positionnement des organes de crabotage au niveau du moyeu 116. En revanche, le flasque 92 du premier mode de réalisation possède une meilleure tenue mécanique, car il est sectorisé, et permet d'assurer de manière plus fiable le contact axial entre le rebord évasé 112 et les parois radiales transverses 84.

## Revendications

1. Ensemble rotatif pour turbomachine, l'ensemble rotatif comprenant :
- un disque (10) dont la périphérie externe est formée d'une alternance d'alvéoles (14) et de dents (12),
- des aubes (18) s'étendant radialement depuis le disque (10) et dont les pieds (16) sont engagés axialement et retenus radialement dans les alvéoles (14) du disque,
- une surface cylindrique (78) faisant face radialement vers l'intérieur du disque et sur laquelle est maintenu un joint annulaire (80) d'étanchéité au moyen d'une pièce (56, 92, 114) solidarisée au disque, ladite pièce (56, 92, 114) s'étendant sous des épaulements (74, 76) et appuyant radialement le joint annulaire (80) contre ladite surface cylindrique (78), **caractérisé en ce que** les dents (12) du disque et les pieds d'aube (16) comprennent, à leurs extrémités axiales amont et/ou aval, lesdits épaulements (74, 76) axiaux qui sont disposés circonférentiellement bout à bout en alternance et qui forment conjointement ladite surface cylindrique (78).

2. Ensemble rotatif selon la revendication 1, **caractérisé en ce que** ladite pièce (56, 92, 114) comprend une gorge annulaire (100) dans laquelle le joint annulaire (80) est monté.

3. Ensemble selon la revendication 1 ou 2, **caractérisé en ce que** les épaulements (74) des pieds d'aubes (16) sont formés par les faces d'extrémités radialement internes de parois radiales (84) amont et/ou aval s'étendant transversalement au pied d'aube et reliées extérieurement à des plates-formes (24) des aubes et intérieurement aux pieds d'aubes (16).

4. Ensemble selon l'une des revendications précédentes, **caractérisé** :
- **en ce que** ladite pièce solidarisée au disque est un flasque annulaire (92, 114) appliqué sur une face amont et/ou aval du disque et comprenant des moyens de crabotage (86) coopérant avec des moyens de crabotage complémentaires (110) du disque (10) pour la retenue axiale du flasque sur le disque et le flasque (92) est formé de plusieurs secteurs agencés circonférentiellement bout à bout, et
- **en ce que** chaque secteur de flasque comprend une partie interne (94) en appui radialement vers l'extérieur sur le joint annulaire (80) et une partie externe (96) comprenant lesdits moyens de crabotage (86) coopérant avec lesdits moyens de crabotage complémentaires (110) formés sur les dents (12) du disque, ces moyens de crabotage complémentaires du disque étant formés en saillie axiale par rapport aux pieds d'aubes (16).

5. Ensemble selon la revendication 4 lorsqu'elle dépend de la revendication 3, **caractérisé en ce que** la partie externe (96) de chaque secteur de flasque (92) comprend une paroi radiale (108) se prolongeant extérieurement par un rebord évasé (112) dont l'extrémité libre externe est destinée à venir en appui sur l'une des parois transverses (84) amont ou aval des aubes.

6. Ensemble selon la revendication 4 ou 5, **caractérisé en ce que** la partie interne (94) de chaque secteur de flasque (92) comprend une paroi cylindrique (98) dont une partie d'extrémité en vis-à-vis du disque est en appui radialement vers l'extérieur sur le joint annulaire (80) et se prolonge par une paroi tronconique (102) s'étendant vers l'intérieur en s'éloignant du disque (10), un jonc annulaire fendu (106) étant intercalé axialement entre la paroi tronconique (102) et le disque (10).

7. Ensemble selon la revendication 3, **caractérisé en ce que** ladite pièce solidarisée au disque est un anneau (56) de support de léchettes (58) d'étanchéité destinées à coopérer avec un bloc de matière abradable (60) en vis-à-vis radial.

8. Ensemble selon l'une des revendications précédentes, **caractérisé en ce que** l'aube (18) est en composite à matrice céramique et le disque (10) en alliage métallique.

9. Ensemble selon l'une des revendications précédentes, **caractérisé en ce que** la surface cylindrique (78) qui fait face radialement vers l'intérieur du disque et sur laquelle est maintenu en appui le joint annulaire (80) d'étanchéité est dépourvu de gorge dans laquelle le joint annulaire serait monté.

10. Ensemble selon l'une des revendications précédentes, **caractérisé en ce que** chaque alvéole (14) présente un fond et chaque fond d'alvéole est fermé, de sorte qu'il ne communique pas avec le fond d'alvéole où est logé un pied d'aube adjacent.

11. Ensemble selon l'une des revendications précédentes, **caractérisé en ce que** les épaulements (74,76) sont formés radialement au même niveau que des zones de contact entre des flancs latéraux des dents (12) du disque et des flancs latéraux des pieds d'aubes (16), lorsque les pieds d'aubes sont plaqués vers l'extérieur contre les dents par effet centrifuge.

12. Turbine de turbomachine, **caractérisée en ce qu'**elle comprend l'ensemble rotatif selon l'une des revendications précédentes.

13. Turbomachine, telle qu'un turboréacteur ou un turbopropulseur, **caractérisée en ce qu'**elle comprend l'ensemble rotatif selon l'une des revendications 1 à 11.

## Patentansprüche

1. Rotierende Anordnung für ein Turbotriebwerk, wobei die rotierende Anordnung enthält:
- eine Scheibe (10), deren äußerer Umfang aus einer Wechselfolge von Zellen (14) und Zähnen (12) gebildet ist,
- Schaufeln (18), die sich radial von der Scheibe (10) aus erstrecken und deren Schaufelfüße (16) axial in die Zellen (14) der Scheibe eingreifen und radial darin gehalten werden, und
- eine zylindrische Fläche (78), die radial zum Inneren der Scheibe weist und an der eine ringförmige Dichtung (80) mittels eines mit der Scheibe fest verbundenen Teils (56, 92, 114) gehalten wird, wobei sich das Teil (56, 92, 114) unterhalb von Schultern (74, 76) erstreckt und die ringförmige Dichtung (80) radial an die zylindrische Fläche (78) drückt,
**dadurch gekennzeichnet, dass**
die Zähne (12) der Scheibe und die Schaufelfüße (16) an ihren stromaufwärts und/oder stromabwärts gelegenen axialen Enden die axialen Schultern (74, 76) aufweisen, die in Umfangsrichtung abwechselnd auf Stoß angeordnet sind und gemeinsam die zylindrische Fläche (78) bilden.

2. Rotierende Anordnung nach Anspruch 1,
**dadurch gekennzeichnet, dass** das Teil (56, 92, 114) eine ringförmige Nut (100) aufweist, in der die ringförmige Dichtung (80) angebracht ist.

3. Anordnung nach Anspruch 1 oder 2,
**dadurch gekennzeichnet, dass** die Schultern (74) der Schaufelfüße (16) durch die radial inneren Endflächen von stromaufwärts und/oder stromabwärts quer zum Schaufelfuß verlaufenden radialen Wänden (84) gebildet werden, die außen mit Schaufelplattformen (24) und innen mit den Schaufelfüßen (16) verbunden sind.

4. Anordnung nach einem der vorhergehenden Ansprüche,
**dadurch gekennzeichnet, dass**
- das fest mit der Scheibe verbundene Teil ein ringförmiger Flansch (92, 114) ist, der an einer stromaufwärts und/oder stromabwärts gelegenen Fläche der Scheibe anliegt und Formschlussmittel (86) aufweist, die mit komplementären Formschlussmitteln (110) der Scheibe (10) für den axialen Halt des Flansches an der Scheibe zusammenwirken, und der Flansch (92) aus mehreren Sektoren gebildet ist, die in Umfangsrichtung auf Stoß angeordnet sind, und
- dass jeder Flanschsektor einen inneren Abschnitt (94), der sich radial nach außen auf der ringförmigen Dichtung (80) abstützt, und einen äußeren Abschnitt (96) enthält, der die Formschlussmittel (86) enthält, die mit den komplementären Formschlussmitteln (110) zusammenwirken, die an den Zähnen (12) der Scheibe ausgebildet sind, wobei diese komplementären Formschlussmittel der Scheibe bezüglich der Schaufelfüße (16) axial vorspringend ausgebildet sind.

5. Anordnung nach Anspruch 4 in Abhängigkeit von Anspruch 3,
**dadurch gekennzeichnet, dass** der äußere Abschnitt (96) jedes Flanschsektors (92) eine radiale Wand (108) aufweist, die sich nach außen mit einem aufgeweiteten Rand (112) fortsetzt, dessen äußeres freies Ende dazu bestimmt ist, an einer der stromaufwärts oder stromabwärts gelegenen Querwände (84) der Schaufeln zur Anlage zu kommen.

6. Anordnung nach Anspruch 4 oder 5,
**dadurch gekennzeichnet, dass** der innere Abschnitt (94) jedes Flanschsektors (92) eine zylindrische Wand (98) aufweist, deren der Scheibe zugewandter Endabschnitt radial nach außen an der ringförmigen Dichtung (80) anliegt und von einer kegelstumpfförmigen Wand (102) fortgesetzt wird, die sich von der Scheibe (10) weg nach innen erstreckt, wobei axial zwischen der kegelstumpfförmigen Wand (102) und der Scheibe (10) ein geschlitzter Ring (106) angeordnet ist.

7. Anordnung nach Anspruch 3,
**dadurch gekennzeichnet, dass** das fest mit der Scheibe verbundene Teil ein Ring (56) zum Tragen von Dichtungsleisten (58) ist, die dazu bestimmt sind, mit einem radial zugewandten Block aus Abreibmaterial (60) zusammenzuwirken.

8. Anordnung nach einem der vorhergehenden Ansprüche,
**dadurch gekennzeichnet, dass** die Schaufel (18) aus einem Keramik-Matrix-Verbundwerkstoff und die Scheibe (10) aus einer Metalllegierung besteht.

9. Anordnung nach einem der vorhergehenden Ansprüche,
**dadurch gekennzeichnet, dass** die zylindrische Fläche (78), die radial zum Inneren der Scheibe weist und an der die ringförmige Dichtung (80) in Anlage gehalten wird, keine Nut aufweist, in welcher die Ringdichtung angebracht wäre.

10. Anordnung nach einem der vorhergehenden Ansprüche,
**dadurch gekennzeichnet, dass** jede Zelle (14) einen Boden aufweist und jeder Zellenboden geschlossen ist, so dass er nicht mit dem Zellenboden kommuniziert, wo ein benachbarter Schaufelfuß aufgenommen ist.

11. Anordnung nach einem der vorhergehenden Ansprüche,
**dadurch gekennzeichnet, dass** die Schultern (74, 76) radial in gleicher Höhe wie Kontaktbereiche zwischen Seitenflanken der Zähne (12) der Scheibe und Seitenflanken der Schaufelfüße (16) ausgebildet sind, wenn die Schaufelfüße durch Zentrifugalwirkung nach außen an die Zähne gedrückt werden.

12. Turbine für ein Turbotriebwerk,
**dadurch gekennzeichnet, dass** sie die rotierende Anordnung nach einem der vorhergehenden Ansprüche enthält.

13. Turbotriebwerk, wie etwa Turbostrahl- oder Turboprop-Triebwerk,
**dadurch gekennzeichnet, dass** es die rotierende Anordnung nach einem der Ansprüche 1 bis 11 enthält.

## Claims

1. A rotary assembly for a turbomachine, the rotary assembly comprising:
- a disk (10) the outer periphery of which is formed from an alternation of cavities (14) and teeth (12),
- blades (18) extending radially from the disk (10) and roots (16) of which are axially engaged into, and radially held in the cavities (14) of the disk, and,
- a cylindrical surface (78) facing radially towards the inside of the disk and on which an annular seal (80) is maintained by means of a part (56, 92, 114) solidarized to the disk, said part (56, 92, 114) extending under the shoulders (74, 76) and radially pressing the annular seal (80) against said cylindrical surface (78),
**characterized in that** the teeth (12) of the disk and the blade roots (16) comprise, at upstream and/or downstream axial ends thereof, said axial shoulders (74, 76) which are disposed circumferentially end-to-end in alternation and which together form said cylindrical surface (78).

2. The rotary assembly according to claim 1, **characterized in that** said part (56, 92, 114) comprises an annular groove (100) wherein the annular seal (80) is mounted.

3. The assembly according to claim 1 or 2, **characterized in that** the shoulders (74) of the blade roots (16) are formed by radially inner end faces of upstream and/or downstream radial walls (84) which extend transversely to the blade root and are externally connected to platforms (24) of the blades and internally to the blade roots (16).

4. The assembly according to one of the preceding claims **characterized**:
- **in that** said part solidarized to the disk is an annular flange (92, 114) applied onto an upstream and/or downstream face of the disk and comprising jaw clutching means (86) cooperating with matching jaw clutching means (110) of the disk (10) for axially holding the flange on the disk, and the flange (92) is formed of several sectors arranged circumferentially end-to-end and,
- **in that** each flange section comprises an inner portion (94) radially supported toward the outside by the annular seal (80) and an outer portion (96) comprising said jaw clutching means (86) cooperating said matching jaw clutching means (110) formed on the teeth (12) of the disk, said matching jaw clutching means of the disk axially protruding with respect to the blade roots (16).

5. The assembly according to claim 4 when dependent on claim 3, **characterized in that** the outer portion (96) of each flange section (92) comprises a radial wall (108) extending externally in a flared rim (112), the outer free end of which is intended to rest applied on one of the upstream or downstream transverse walls (84) of the blades.

6. The assembly according to claim 4 or 5, **characterized in that** the inner portion (94) of each flange section (92) comprises a cylindrical wall (98), one end portion of which facing the disk is radially applied toward the outside on the annular seal (80) and is extended by a frustoconical wall (102) extending inwardly away from the disk (10), with a split annular ring (106) being axially inserted between the frustoconical wall (102) and the disk (10).

7. The assembly according to claim 3, **characterized in that** said part made integral with the disk is a ring (56) for supporting sealing lips (58) intended to cooperate with a radially opposite block (60) made of an abradable material.

8. The assembly according to one of the preceding claims, **characterized in that** the blade (18) is made of a ceramic matrix composite material and the disk (10) is made of a metal alloy.

9. The assembly according to one of the preceding claims, **characterized in that** the cylindrical surface (78) which faces radially towards the inside of the disk and on which the annular seal (80) is applied is free of annular groove wherein an annular seal would be mounted.

10. The assembly according to one of the preceding claims, **characterized in that** each cavity (14) has a bottom and each cavity bottom is closed, so that said cavity bottom has no communication with the cavity bottom in which is disposed an adjacent blade root.

11. The assembly according to one of the preceding claims, **characterized in that** the shoulders (74,76) are radially formed at the same level than contact zones between lateral flanks of the disc teeth (12) and lateral flanks of the blade roots (16), when the blade roots are pressed outwards against the teeth by centrifugal effect.

12. A turbine for a turbomachine, **characterized in that** it comprises the rotary assembly according to one of the preceding claims.

13. A turbomachine such as a turbojet or a turboprop, **characterized in that** it comprises the rotary assembly according to one of claims 1 to 11.
